# EUROPEAN PATENT SPECIFICATION

(11) **EP 3 668 626 B1**
(45) Date of publication and mention of the grant of the patent: **08.11.2023**
(21) Application number: 18846052.1
(22) Date of filing: 17.08.2018
(51) Int. Cl.: B01D 21/01, C02F 1/52, C02F 1/28, C02F 1/48, C02F 1/56, C02F 11/12, C02F 103/10, C02F 103/32, C02F 103/36, C02F 11/122

(54) **TREATMENT OF LIQUID STREAMS CONTAINING HIGH CONCENTRATIONS OF SOLIDS USING BALLASTED CLARIFICATION**
BEHANDLUNG VON FLÜSSIGKEITSSTRÖMEN MIT HOHEN FESTSTOFFKONZENTRATIONEN UNTER VERWENDUNG VON BALLASTKLÄRUNG
TRAITEMENT DE FLUX LIQUIDES CONTENANT DES CONCENTRATIONS ÉLEVÉES DE SOLIDES À L'AIDE D'UNE CLARIFICATION BALLASTÉE

(30) Priority: 18.08.2017 US 201762547193 P
(43) Date of publication of application: 24.06.2020
(73) Proprietor: Evoqua Water Technologies LLC, Pittsburgh, PA 15222 (US)
(72) Inventor: HOEFERLIN, Paul, Colorado Springs, Colorado 80922 (US); RIFFE, Michael, Gibsonia, Pennsylvania 15044 (US); SASSAMAN, Frank, L., Jr., Fombell, Pennsylvania 16123 (US)
(74) Representative: Murgitroyd & Company
(86) International application number: PCT/US2018/046883
(87) International publication number: WO 2019/036598

(56) References cited:
- WO-A1-2013/187979
- WO-A1-2017/214003
- US-A- 4 013 552
- US-A1- 2008 169 245
- US-A1- 2011 127 220
- US-A1- 2013 313 201
- US-A1- 2014 001 119
- US-A1- 2016 102 006
- US-A1- 2016 145 126
- US-B1- 6 398 921
- "Glossary of Wastewater Terms", MINDEN GARDNERVILLE SANITATION DISTRICT, 12 November 2011 (2011-11-12), XP055572685, Retrieved from the Internet: URL:http://www.mgsdistrict.org/wp-content/ uploads/2011/11/Glossary-of-Wastewater-Ter ms.pdf [retrieved on 2018-10-16]
- "Sewage", WIKIPEDIA, 20 January 2017 (2017-01-20), XP055572694, Retrieved from the Internet: URL:https://en.wikipedia.org/w/index.php?t itle=Sewage&oldid=760953273 [retrieved on 2018-10-16]

## Description

### CROSS-REFERENCE TO RELATED APPLICATION

This application claims priority under 35 U.S.C. §119(e) to U.S. Provisional Application Serial No. 62/547,193, titled "TREATMENT OF LIQUID STREAMS CONTAINING HIGH CONCENTRATIONS OF SOLIDS USING BALLASTED FLOCCULATION", filed on August 18, 2017.

### FIELD OF TECHNOLOGY

The field of the current application is wastewater treatment utilizing ballast to treat solids and revover ballast from the treated solids.

### SUMMARY

The essential features of the invention are set out in independent system claim 1 and method claim 5. Further preferred embodiments are described in dependent claims 2-4, 6-9. The invention is directed to a high-solids wastewater treatment system comprising:a ballasted reactor having an inlet and an outlet;a solids-liquid separation subsystem having an inlet in fluid communication with the outlet of the ballasted reactor and configured to separate treated wastewater into a solids-lean effluent and a solids-rich ballasted floc;a pre-treatment subsystem positioned upstream from the ballasted reactor, having an inlet in fluid communication with a source of high-solids wastewater and configured to receive at least one of a coagulant and a flocculant to produce a dosed wastewater, the pre-treatment subsystem further configured to thicken the dosed wastewater and produce a sludge and an effluent, the pre-treatment subsystem having an effluent outlet in fluid communication with the inlet of the ballasted reactor;a ballast feed subsystem configured to deliver magnetite to the ballasted reactor; anda ballast recovery subsystem configured to receive the ballasted floc from the outlet of the solids-liquid separation subsystem and deliver the ballasted floc to at least one of the ballasted reactor and the pre-treatment subsystem, the pre-treatment system further comprising a filter press positioned downstream from the pre-treatment subsystem, the filter press configured to receive the sludge from the pre-treatment subsystem and produce a pressate and a filter cake.

Some relevant prior art documents are US 2013/313201 A1, US 2011/127220 A1, US 2016/145126 A1, WO 2013/187979 A1.

In accordance with some embodiments, the pre-treatment subsystem may comprise a reaction tank having an inlet in fluid communication with a source of high-solids wastewater and a thickener positioned downstream from the reaction tank and having an outlet in fluid communication with the inlet of the ballasted reactor.

The wastewater treatment system comprises a filter press positioned downstream from the pre-treatment subsystem. The filter press is configured to receive the sludge and produce a pressate and a filter cake. The pre-treatment subsystem further comprises an inlet in fluid communication with a pressate outlet of the filter press.

In accordance with certain embodiments, the source of high-solids wastewater may be configured and arranged to deliver wastewater comprising at least 500 mg/L of total suspended solids (TSS) to the pre-treatment subsystem. The source of high-solids wastewater may be configured and arranged to deliver wastewater comprising at least 2000 mg/L of TSS to the pre-treatment subsystem. The source of the high-solids wastewater may be configured and arranged to deliver wastewater comprising inorganic solids.

In accordance with certain embodiments, the pre-treatment subsystem may comprise a reaction tank and a thickener. The reaction tank may be fluidly connectable to the source of the wastewater and the source of the at least one of the coagulant and the flocculant. The thickener may be fluidly connectable to the reaction tank and the ballasted reactor.

The system also comprises a a filter press. The filter press has an inlet fluidly connectable to the sludge outlet of the pre-treatment subsystem, a pressate outlet, and a filter cake outlet. The pressate outlet may be fluidly connectable to the pre-treatment subsystem.

According to the invention, there is provided a method of a treating high-solids wastewater. The method comprises contacting a wastewater feed from a source of high-solids wastewater with at least one of a coagulant and a flocculant to produce a dosed wastewater, thickening the dosed wastewater to produce a sludge and an effluent, treating the effluent with a ballast to produce a treated wastewater, settling the treated wastewater to produce a solids-lean effluent and a solids-rich ballasted floc, and conveying the ballasted floc to at least one of the ballasted reactor or pre-treatment subsystem.

The method further comprises filtering the sludge to produce a pressate and a filter cake. The method may further comprise conveying the pressate to the wastewater feed.

In accordance with certain embodiments, the method may comprise conveying the ballasted floc to the ballasted reactor or the pre-treatment subsystem.

The method comprises pre-treating the wastewater feed by contacting the wastewater feed with the coagulant to produce the dosed wastewater. The method may further comprise contacting the dosed wastewater with the flocculant.

In some embodiments, treating the high-solids wastewater may comprise treating wastewater having at least 500 mg/L of TSS. Treating the high-solids wastewater may comprise treating wastewater having at least 2000 mg/L of TSS.

Treating the high-solids wastewater may comprise treating wastewater including inorganic solids. In some embodiments, treating the high-solids wastewater may comprise contacting the wastewater feed from an industrial source selected from the group consisting of a power plant, a mining operation, a food and beverage production operation, an oil or gas production plant, an oil or gas production refinery, and a general industrial plant.

In accordance with certain embodiments, contacting the wastewater feed with at least one of the coagulant and the flocculant may be performed in a reaction tank positioned in the pre-treatment unit. Thickening the dosed wastewater is performed in the pre-treatment unit. Thickening the dosed wastewater may be performed in a thickener positioned in the pre-treatment unit. The dosed wastewater may be conveyed from the reaction tank to the thickener.

According to the invention, treating the effluent with a ballast is performed in a ballasted reactor. Settling the treated wastewater may be performed in a solids-liquid separator. The treated wastewater is conveyed from the ballasted reactor to the solids-liquid separator.

The disclosure contemplates all combinations of any one or more of the foregoing aspects and/or embodiments, as well as combinations with any one or more of the embodiments set forth in the detailed description and any examples.

### BRIEF DESCRIPTION OF DRAWINGS

The accompanying drawings are not intended to be drawn to scale. In the drawings, each identical or nearly identical component that is illustrated in various figures is represented by a like numeral. For purposes of clarity, not every component may be labeled in every drawing. In the drawings:
FIG. 1 is a box diagram of a system for treating high-solids wastewater, not forming part of the invention;
FIG. 2 is a box diagram of a portion of a system for treating high-solids wastewater, not forming part of the invention;
FIG. 3 is a box diagram of a portion of a system for treating high-solids wastewater, according to one embodiment; and
FIG. 4 is a schematic diagram of a mass balance around a system for treating high-solids wastewater, according to one embodiment.

### DETAILED DESCRIPTION

Ballasted flocculation settling processes, such as CoMag^{®} Water Treatment System (Evoqua Water Technologies, LLC, Pittsburgh, PA) and BioMag^{®} Water Treatment System (Evoqua Water Technologies, LLC, Pittsburgh, PA), are typically used to treat relatively low solids wastewaters, for example, containing less than 500 mg/L of total suspended solids (TSS). Generally, wastewater having greater than 500 mg/L may be pre-treated with a clarifier to remove excess suspended solids before treating with a ballasted flocculation system to produce the product water. However, such a system can be overloaded with wastewater exceeding 2,000 mg/L TSS, resulting in product water which does not meet discharge requirements.

In accordance with the invention, systems and methods disclosed herein include thickening high-solids wastewater to remove sludge prior to treating with ballasted flocculation. Accordingly, high-solids wastewater, for example, exceeding 2,000 mg/L TSS, can be treated by ballasted flocculation. Furthermore, conventional ballasted flocculation systems may include a thickener downstream of a ballasted flocculation unit to remove excess solids from the solids-rich stream and recycle ballast. In accordance with certain embodiments, the systems disclosed herein may include the thickener positioned upstream of the ballasted flocculation unit, to remove excess solids prior to ballasted treatment. In some embodiments, the solids-rich stream may be conveyed to the upstream thickener, significantly reducing footprint of the system. In some embodiments, the wastewater treatment system can be operated with up to 15% less additives, for example, coagulant, than conventional high-solids treatment systems.

Thus, according to certain aspects, the embodiments disclosed herein may be used to treat high-solids wastewater with TSS levels greater than 500 mg/L. The high-solids wastewater may comprise an industrial wastewater. For example, the methods of treating wastewater may include treating high-solids wastewater comprising waste from one or more of a power plant, a mining operation, food and beverage production, oil and gas production and/or refineries, general industrial plants, reuse or discharge of wastewater. Such wastewater sources may generate wastewater having more than 500 mg/L TSS, for example more than 2,000 mg/L TSS, which conventionally would have too many solids to be effectively treated with a ballasted flocculation treatment system. In some embodiments, the systems and methods disclosed herein may be operated to treat wastewater including inorganic solids.

In some embodiments, the systems and methods for the treatment of wastewater may involve biological treatment of the wastewater in aerobic and/or anaerobic biological treatment units. Biological treatment units may be selected to reduce the total organic content and/or biochemical oxygen demand of the wastewater. The treatment methods may include chemical treatment of wastewater in coagulation units using coagulants. The treatment methods may include physical treatment of wastewater in flocculation units using flocculants, for example, polymer. These methods may be employed to remove organic and/or inorganic contaminants from the wastewater as necessary.

As used herein, "coagulation" refers to a chemical process in which non-settleable particles are destabilized and attract to form clumps. Coagulation is a chemical process achieved by neutralizing the particles and reducing the repelling force between them. Coagulants generally alter the chemistry of the suspension to induce settling. Examples of coagulants generally include inorganic salts of aluminum and iron, for example, ferric chloride and ferric sulfates. These salts generally neutralize the charge on the particles and hydrolyze to form insoluble precipitates of the particles. Other examples of coagulants include organic coagulants, such as, diallyldimethylammonium chloride (DADMAC). Other coagulants may be used.

As used herein, "flocculation" refers to a physical process in which particle clumps are physically joined to form larger particle masses and then a precipitate. Flocculation is a physical process of clumping. Flocculation can be achieved by physical agitation, for example, by mixing. Optionally a flocculant can be added to aid in the flocculation process. Flocculants generally provide a base for the settling particles to physically attach and grow into a floc or flake. Exemplary flocculants include, for example, polymers, for example, high molecular weight polymers, medium molecular weight polymers, low molecular weight polymers, and cationic or anionic polymers.

In certain treatment processes a flocculant may be used in combination with a coagulant to generate larger particles for faster settling. For instance, a coagulant may be added to clump the non-settleable particles together and a flocculant may be added to gather the small clumps formed by the coagulation and form larger clumps. However, a flocculant and coagulant need not be used together. Coagulants and flocculants may operate under different conditions. Thus, the conditions of the suspension to be treated, for example, pH, temperature, and composition, may be considered when selecting whether to dose the water with a coagulant, flocculant, or both. In some embodiments, water may be dosed with a coagulant during one stage of treatment and dosed with a flocculant during another stage of treatment.

Various methods of wastewater treatment may also involve the removal of flocculated solids formed by a flocculation process from treated wastewater. Methods may also involve the removal of coagulated solids formed by a coagulation process from treated wastewater. These forms of biological, physical and/or chemical treatment typically result in the formation of sludge. As used herein, "sludge" refers to a residual, solids-containing material that is produced as a by-product during treatment of the wastewater. Sludge may comprise dead bacteria and byproducts of the biological treatment. In some methods, the sludge is removed from the wastewater after undergoing biological, physical, and/or chemical treatment by settling in a settling unit or clarifier. The sludge may be removed from the wastewater after undergoing biological, physical, and/or chemical treatment by thickening in a thickening unit.

Accordingly, a ballasted flocculation settling process can be effectively used on high solids streams. The process may provide gross solids reduction and thickening in a single process step upstream from the ballasted flocculation treatment. Thus, the overall foot print area of the system can be significantly reduced. Typically, a thickener would be used to treat the waste solids stream from the ballasted flocculation settling process. However, in the systems disclosed herein, the thickener can be positioned upstream and used for pre-settling and thickening.

The invention disclosed herein is directed to systems and methods for treating wastewater. In accordance with certain aspects, there is provided a system for treating wastewater. In some embodiments, the systems and methods are capable of treating wastewater containing a high concentration of suspended solids. For example, the wastewater to be treated may have between about 500 mg/L TSS and about 5,000 mg/L TSS, and in some implementation, up to about 20-30 g/L TSS. In accordance with certain embodiments, the wastewater to be treated may have more than 500 mg/L TSS, more than 1,000 mg/L TSS, more than 2,000 mg/L, more than 2,500 mg/L TSS, more than 3,000 mg/L, more than 3,500 mg/L, more than 4,000 mg/L TSS, more than 4,500 mg/L, up to about 5,000 mg/L TSS, or up to about 30 g/L TSS.

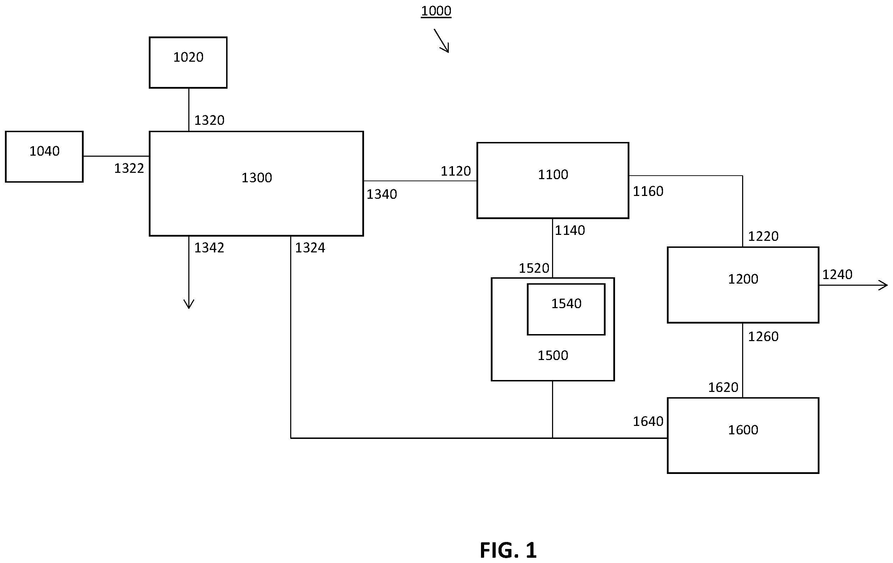

The high-solids wastewater may be contacted with at least one of a coagulant and a flocculant to produce a dosed wastewater. Thus, in one embodiment, as shown in FIG. 1, high-solids wastewater is initially directed to a pre-treatment subsystem. The pre-treatment subsystem may be operated to treat for removal of gross levels of solids and contaminants from the high-solids wastewater. For instance, the pre-treatment subsystem may be configured to receive at least one of a coagulant and a flocculant to produce a dosed wastewater. In some embodiments, the pre-treatment subsystem may be configured to combine the wastewater feed with the coagulant to destabilize and chemically combine contaminants. The coagulant-dosed wastewater can be combined with other recycle streams, described in more detail below. Optionally, the coagulant-dosed wastewater can then be combined with a flocculant to physically combine the coagulated contaminants.

In some embodiments, the pre-treatment subsystem may be configured to receive an adsorbent. Adsorption may be described as a physical and chemical process of accumulating a substance at the interface between liquid and solids phases. According to some embodiments, the adsorbent may be a powdered activated carbon (PAC). PAC is generally a highly porous material and provides a large surface area to which contaminants may adsorb. PAC may have a diameter of less than 0.1 mm and an apparent density ranging 320 kg/m3 and about 801 kg/m3 (20 and 50 lbs/ft³) PAC may have a minimum iodine number of 500 as specified by AWWA (American Water Works Association) standards. Although described herein with reference to PAC, the adsorbent may be any suitable adsorbent for treatment of the specific wastewater.

As part of the gross solids removal from the wastewater, the dosed wastewater is thickened to produce a sludge and an effluent. In some embodiments, the pre-treatment subsystem may be configured to thicken the dosed wastewater. The thickening may be performed in a weir tank or sludge thickener. In some embodiments, thickening may be performed by any one or more of gravity thickening, dissolved air-flotation, rotary drum thickening, and centrifugation. The thickening may generally treat wastewater having more than 2,000 mg/L of TSS as described above and produce an effluent having less than 2,000 mg/L of TSS, for example, less than 500 mg/L of TSS, less than 400 mg/L TSS, less than 300 mg/L TSS, less than 200 mg/L TSS, less than 100 mg/L TSS, or less than 50 mg/L TSS. In some embodiments, the pre-treatment subsystem may be operated to produce an effluent having between 150 and 500 mg/L TSS and a sludge between 20,000 to 50,000 mg/L TSS. The effluent or overflow may be directed to a ballasted flocculation system for further treatment. For example, the pre-treatment subsystem may be fluidly connected upstream from a ballasted reactor.

In accordance with some embodiments, the pre-treatment subsystem may contain a reaction tank having an inlet in fluid communication with a source of high-solids wastewater and a thickener positioned downstream from the reaction tank and having an outlet in fluid communication with the inlet of a ballasted reactor. The reaction tank may be operated to have a hydraulic residence time (HRT) as needed for the wastewater being treated. In some embodiments the HRT can be between 1 minute and 5 hours, for example, between 10 minutes and 2 hours, for example, between 20 minutes and 1 hour. The reaction tank may be operated to have a HRT of about 5 minutes, about 10 minutes, about 20 minutes, about 30 minutes, about 40 minutes, about 50 minutes, or about 1 hour.

The reaction tank and thickener may be housed in a vessel with multiple partitions. In other embodiments, the reaction tank and thickener may be housed in more than one vessel. The coagulant, flocculant, other additive, or combination thereof may be added to the wastewater in the reaction tank to treat for removal of gross levels of solids and contaminants. In accordance with some embodiments the thickener may be configured to thicken the dosed wastewater and produce an effluent and a sludge. The gross solids removed may be thickened in the thickener and directed to a downstream dewatering treatment. Thus, the thickener may be positioned upstream from a ballasted reactor and have an outlet for providing effluent to the inlet of the ballasted reactor.

The downstream dewatering treatment comprises a filter press to produce a pressate and a filter cake. The dewatering system or filter press is positioned downstream from the pre-treatment subsystem and configured to receive and treat the sludge from the pre-treatment subsystem.

The method may further comprise conveying the pressate to the wastewater feed for recirculation. The pressate may be recirculated to the pre-treatment subsystem to be combined with the wastewater feed. In some embodiments, the pre-treatment subsystem, for example, the reaction tank, may have an inlet in fluid communication with a pressate outlet of the filter press, for example, via a recirculation line positioned to fluidly connect the filter press and the pre-treatment subsystem. The filter cake may be stored, recirculated, or discarded.

The method of wastewater treatment comprises treating the effluent with ballast, being magnetite to produce a treated wastewater. The system thus comprises a ballasted reactor having an inlet in fluid communication with an effluent outlet of the pre-treatment subsystem. The ballasted reactor further has an outlet in fluid communication with a downstreatm treatment system.

The ballasted reactor may be configured to treat the thickener effluent from the pre-treatment subsystem and output a treated wastewater from the outlet. Typically, in a ballasted reactor, inorganic contaminants can be aggregated to form a "floc," which refers to aggregations of suspended particles or solids, and may include biological, physical, and/or chemical floc. The aggregates or flocs can be impregnated with a weighting agent or ballast to form a "ballasted floc." Impregnating the floc with a ballast will generally cause the floc to settle more rapidly than it would otherwise settle, facilitating separation.

One or more additives may also be introduced to the ballast reactor to aid in increasing the specific gravity of the floc. Non-limiting examples of such additives include coagulants, such as ferric sulfates, flocculants, such as anionic polymers, and adsorbents, such as powdered activated carbon. The addition of ballast, and optionally one or more additives, typically improves the removal of dissolved, colloidal, particulate, and microbiological solids. The precipitation and enhanced settleability of ballasted solids can provide for a more efficient downstream solids-liquid separation system.

In some embodiments, the ballasted reactor may comprise a biological reactor. The biological treatment units or vessels typically include bacteria that break down components of the wastewater, for example, organic components. The biological treatment processes in the biological treatment units or vessels may reduce the total organic content and/or biological organic content of the wastewater. Biological treatment processes can result in the formation of biological floc.

Biological treatment typically utilizes an aeration tank(s) that contains microorganisms that ingest contaminants in an effluent to form biological flocs. Oxygen is typically fed into the aeration tank(s) to promote grown of these biological flocs. The microorganisms of the biological sludge consume and digest suspended and colloidal organic solids by breaking down complex organic molecules into simple waste products that may, in turn, be broken down by other microorganisms. The microorganisms in the aeration tank grow and multiply as allowed by the quantities of air and consumable solids available. The combination of effluent, or in some cases raw sewage, and biological flocs is commonly known as "mixed liquor."

The method of treating wastewater comprises separating the ballasted floc from a treated effluent. In some embodiments, the method may comprise settling the treated water to produce a solids-lean effluent and a solids-rich ballasted floc. The treated wastewater is separated in a solids-liquid separator comprising a solids-liquid separation subsystem fluidly connected downstream from the ballasted reactor. The solids-liquid separation subsystem is configured to receive the treated wastewater and separate the treated wastewater into a solids-lean effluent and a solids-rich ballasted floc. The solids-lean effluent may be conveyed to a point of use or to a post-treatment system for further processing consistent with its intended use. In accordance with certain embodiments, the systems and methods disclosed herein may produce the solids-lean effluent having less than 30 mg/L TSS, less than 10 mg/L TSS, or less than 5 mg/L TSS from the high-solids wastewater feed. The solids-rich ballasted floc may be conveyed to a ballast recovery subsystem for recirculation in the wastewater treatment system. In some embodiments, the solids-rich ballasted floc may have between about 5,000 mg/L TSS and 20,000 mg/L TSS, for example, about 10,000 mg/L TSS.

In some embodiments, the solids-liquid separation subsystem may comprise a clarifier or other sedimentation tank. The settling vessels or clarifiers of the solids-liquid separation system are generally used to remove suspended solids, including biological, physical, and/or chemical floc (referred to herein as "floc") and/or sludge from the wastewater subsequent to biological, physical, and/or chemical treatment. Floc may have a density close to that of water (1.0 g/cm³).

In biological treatment embodiments, mixed liquor from the aeration tank may be directed to a solids-liquid separation system such as a clarifier or sedimentation tank. During the separation process, biological flocs in the mixed liquor are generally separated from the mixed liquor as waste activated sludge (WAS) and the solids-lean effluent, or "clean" effluent, may be discharged back to the environment or undergo further treatment using further downstream treatment processes. The WAS in the clarifier may be recycled back to the aeration tank(s) by a return activated sludge subsystem. The remaining excess sludge is typically wasted from the system to control the population of microorganisms in the mixed liquor, otherwise referred to as mixed liquor suspended solids (MLSS).

In some embodiments, the method may comprise delivering ballast to a process stream, for example, to the pre-treatment effluent, to treat the wastewater. Thus, the wastewater treatment system may comprise a ballast feed subsystem configured to deliver ballast the ballasted reactor. The ballast feed subsystem may obtain ballast from one or more sources. For instance, recovered ballast from the ballast recovery subsystem (discussed below) may be delivered to the ballast feed system. In addition, fresh or raw ballast may be delivered and used by the ballast feed subsystem.

In accordance with some embodiments the system may further comprise a ballast impregnation subsystem in fluid communication with the inlet of the ballasted reactor. The ballast feed subsystem may be configured to feed ballast to the ballast impregnation subsystem. In accordance with some embodiments the ballast impregnation subsystem may be configured to incorporate ballast into the wastewater mixture, for example, into the pre-treatment effluent, to generate the ballasted wastewater and provide the ballasted wastewater to an inlet of the ballasted reactor. In accordance with some embodiments the ballast feed subsystem may be configured to feed ballast to the pre-treatment subsystem, for example, to the thickener.

According to the invention the ballast is magnetite. The ballast may be provided in the form of small particles or as a powder. The particle sizes of the powder may be in the range of, for example, from about 5 µm to about 100 µm in diameter, with an average diameter of about 20 µm. The particle size of the ballast, for example, may be less than about 100 µm. In some embodiments, the particle size of the ballast may be less than about 40 µm. In some embodiments, the particle size of the ballast may be less than about 20 µm. In some embodiments, the particle size of the ballast may be between about 80 µm to about 100 µm; between about 60 µm to about 80 µm; between about 40 µm to about 60 µm; between about 20 µm to about 40 µm; or between about 1 µm to about 20 µm. Different sizes of ballast may be utilized in different embodiments depending, for example, on the nature and quantity of floc and/or other suspended solids to be removed in a settling process. For instance, the ballast and size of the ballast may be selected based on the nature and quantity of floc. The benefit of ballast is generally to increase the efficiency of separating liquids from solids which increases the efficiency of the clarification performed in the solids-liquid separation system and/or or a thickening process performed downstream from the solids-liquid separation in a fluid recirculation to the pre-treatment subsystem.

The ballast may be introduced at a concentration of between about 5,000 mg/L and 12,000 mg/L. For example, the treatment process can start with a low concentration of ballast, which gradually gets increased. Alternatively, the treatment process can start with a high concentration of ballast, which gradually gets reduced. After a predetermined operation time, the fresh ballast introduced into the system can be decreased and the treatment can operate by recirculated ballast. Generally, about 0.2% of ballast by weight may be lost during operation.

According to the invention, the ballast is magnetite (available from, for example, Quality Magnetite, LLC, Kenova, WV). Magnetite has a much higher density, approximately 5.1 g/cm³, than typical floc formed in biological, physical, and/or chemical wastewater treatment methods. Magnetite is a fully oxidized iron ore (Fe₃O₄). Magnetite is inert, does not rust, and does not react or otherwise interfere with chemical or biological floc. Magnetite also does not stick to metal, meaning that while it is attracted to magnets, it does not attach to metal surfaces, such as steel pipes. The magnetic ballast may have a particle size that allows it to bind with biological and chemical flocs to provide enhanced settling or clarification, and allows it to be attracted to a magnet so that it may be separated from the flocs.

Generally, magnetite ballast, unlike sand, may allow for the magnetite particles to impregnate existing floc. In accordance with some embodiments, a magnetic drum provided in the ballast recovery subsystem may be used to separate the aggregates from the magnetic ballast in an efficient manner.

Although magnetite is utilized as ballast material, other materials, including sand may additional be used as ballast material. Other materials, such as particles or powders comprising nickel, chromium, iron and / or various forms of iron oxide may be used additionally.

According to some aspects, not forming part of the invention, the ballast may be sand. Sand ballasted systems may implement larger ballast sizes to effectively recover the ballast. For instance, sand particles may range in size from 50 µm to about 2000 µm. Sand ballast is non-magnetic. Sand ballasted systems and methods may implement the use of cleaning agents to separate the aggregated solids from the sand particle ballast. The use of a cleaning agent may be related to the large surface area of the sand ballast where solid particulates attach to the sand material. Therefore, mechanical energy alone (i.e., shearing forces from a vortex flow pattern) may generally be insufficient for removing aggregated solids form the surface of the sand particle and chemical methods may be needed to react with and dissolve chemical bonds present on the surface of the sand particle that bind the sand to the aggregated solids. In some embodiments, aggregated solids may be removed from the surfaces of the sand particles in a hydrocyclone.

In accordance with the invention, the method further comprises passing the ballasted floc to a ballast recovery subsystem to produce recovered ballast. The recovered ballasted floc may be recirculated and conveyed to at least one of the wastewater feed, the dosed wastewater, the effluent, and the treated wastewater. The wastewater treatment system further comprises a ballast recovery subsystem configured to receive ballasted floc from the outlet of the solids-liquid separation subsystem and recirculate ballast within the various operations of the water treatment. The ballast recovery subsystem is configured to receive a ballasted floc from the outlet of the solids-liquid separation subsystem and deliver the ballasted floc to one or more units or subsystems of the water treatment system.

For instance, the pre-treatment subsystem may have an inlet in fluid communication with a ballasted floc outlet of the solids-liquid separation subsystem. The pre-treatment subsystem ballast recovery inlet may be positioned or otherwise in fluid communication with the reaction tank or the thickener. In some embodiments, the ballasted floc outlet of the solids-liquid separation subsystem is configured to convey recovered ballast to both the reaction tank and the thickener.

Furthermore, the ballasted reactor may have an inlet in fluid communication with a ballasted floc outlet of the solids-liquid separation subsystem. The ballast recovery subsystem may be configured to provide recovered ballast as a source of ballast that is delivered to the ballasted reactor. Accordingly, recirculated ballast may be delivered to the ballasted reactor. and the ballast feed subsystem may be in fluid communication with the ballast recovery subsystem, such that the ballast feed subsystem is configured to impregnate the pre-treatment effluent with recirculated ballast in the ballasted reactor. One or more of the dosed wastewater, the pre-treatment effluent, and the treated wastewater may be impregnated with recovered ballast.

In some embodiments, the recovered ballasted floc may be recirculated and conveyed to each of the wastewater feed, the dosed wastewater, the effluent, and the treated wastewater. Thus, in some embodiments, the ballast recovery subsystem may be fluidly connectable or fluidly connected to each of the pre-treatment subsystem (for example, the reaction tank and/or the thickener) and the ballast reactor.

In accordance with some embodiments the method may further comprise thickening the ballasted floc prior to recirculating the ballasted floc. The ballast recovery subsystem may further be configured to separate unballasted solids from ballast in the ballasted floc. For example, the ballast recovery subsystem may comprise a thickener, clarifier, or other separator configured to separate ballasted floc from unballasted solids and/or residual wastewater before passing the ballasted floc to the pre-treatment subsystem or ballasted reactor.

In some embodiments, for example, in embodiments in which the ballast is a magnetic material, the ballast recovery subsystem may comprise a magnetic drum separator. The magnetic drum separator may include a drum in which is disposed a magnet. Generally, during operation, the drum rotates to separate magnetic ballast. A mixture of ballast and flocs of sludge can be introduced to the surface of the rotating drum through a conduit or feed ramp. The ballast, when comprised of a magnetic material, for example, magnetite, adheres more strongly to the drum than the non-magnetic flocs of sludge due to the presence of the magnet. The flocs of sludge may fall off the drum, in some examples aided by centripetal force generated by the rotating drum, before the ballast. A division vane may separate the recovered ballast and non-magnetic flocs of sludge into separate output streams.

In another embodiment of the magnetic separator, the mixture of ballast and flocs of sludge may be introduced by a conduit or feed ramp to a position proximate and to the side of the rotating drum. The ballast, when comprised of a magnetic material such as magnetite, generally adheres to the rotating drum due to the presence of the magnet and may be removed from the rotating drum on the opposite side from the conduit or feed ramp by, for example, a scraper or division vane. The non-magnetic flocs of sludge generally do not adhere to the rotating drum and instead may drop from the end of the conduit or feed ramp. The result is the production of separate streams of recovered ballast and other solids. Other separators or methods of separation may be employed to recover ballast from the ballasted floc.

The systems and methods disclosed herein may further comprise measuring or monitoring one or more of pH, additive feed rate (for example, coagulant, flocculant, or adsorbent feed rate into the system), process stream flow rates, concentration of suspended solids and/or other contaminants in the wastewater or other process streams, and sludge recycle rate. The system may comprise one or more sensors to measure such parameters. The methods of treatment may further comprise adjusting one or more of pH, feed rates, and flow rates of solution responsive to the one or more measurements taken therein. For example, the system may further comprise one or more control modules operatively connected to the one or more sensors to control operation of the system.

As described herein, the high-solids wastewater treatment process may be performed to generate more than one stream. In some embodiments, the treatment process may generate three streams, including a treated water stream, a ballast stream, and a waste solids stream. The three streams may be separately generated. In some embodiments, the ballast stream can be reused in the ballasted impregnation of the wastewater. The waste solids stream can be sent to a thickener or weir tank. The solids which have accumulated in the thickener can be sent to a filter press for dewatering. In some embodiments, these solids are sent directly to the filter press.

As shown in FIG. 1 (not forming part of the current invention), there is provided a high-solids wastewater treatment system 1000 comprising a ballasted reactor 1100 having first and second inlets (1120 and 1140, respectively) and an outlet 1160, a solids-liquid separation subsystem 1200 having an inlet 1220 fluidly connectable to the outlet 1160 of the ballasted reactor 1100, a solids-lean effluent outlet 1240, and a solids-rich ballasted floc outlet 1260, a pre-treatment subsystem 1300 having a first inlet 1320 fluidly connectable to a source of high-solids wastewater 1020, a second inlet 1322 fluidly connectable to a source of at least one of a coagulant and a flocculant 1040, an effluent outlet 1340 fluidly connectable to the first inlet 1120 of the ballasted reactor 1100, and a sludge outlet 1342, a ballast feed subsystem 1500 having an outlet 1520 fluidly connectable to the second inlet 1140 of the ballasted reactor 1100, and a ballast recovery subsystem 1600 having an inlet 1620 fluidly connectable to the solids-rich ballasted floc outlet 1260 of the solids-liquid separation subsystem 1200 and an outlet 1640 fluidly connectable to at least one of the ballasted reactor 1100 and the pre-treatment subsystem 1300.

The ballast feed subsystem 1500 may comprise a ballast impregnation system 1540. The ballast recovery subsystem 1600 may be fluidly connectable to the ballasted reactor 1100 through the ballast feed subsystem 1500 (via second inlet 1140) or through a third inlet (not pictured). The ballast recovery subsystem 1600 may be fluidly connectable to the pre-treatment subsystem 1300 through a third inlet 1324.

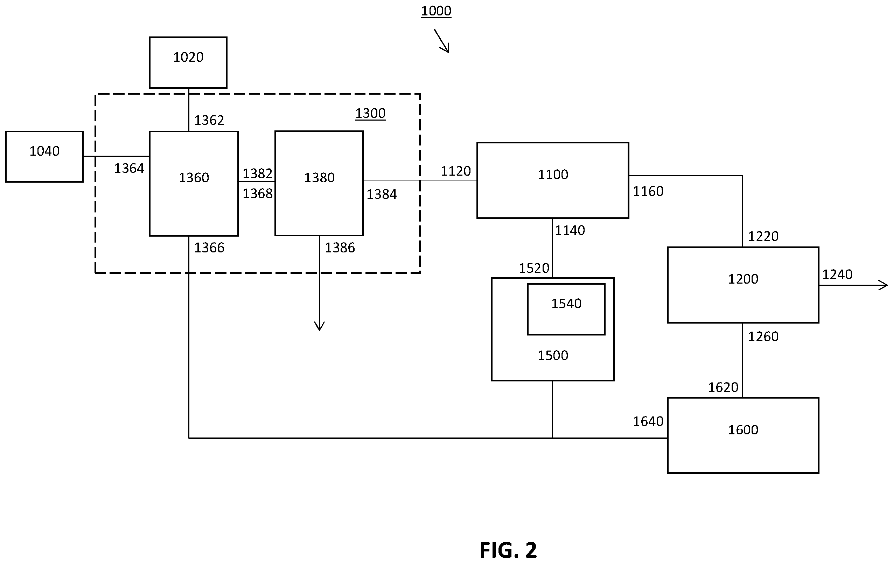

As shown in FIG. 2 (not forming part of the invention), the pre-treatment subsystem 1300 may comprise a reaction tank 1360 and a thickener 1380. The reaction tank 1360 may be fluidly connectable to the source of the wastewater 1020 and the source of the at least one of the coagulant and the flocculant 1040, for example, through first and second inlets 1362 and 1364, respectively. The reaction tank 1360 may further be fluidly connectable to the ballast recovery subsystem 1600 through third inlet 1366. The reaction tank 1360 and the thickener 1380 may be fluidly connectable to each other through a dosed wastewater outlet 1368 of the reaction tank 1360 and a dosed wastewater inlet 1382 of the thickener 1380. The thickener 1380 may include effluent outlet 1384 and sludge outlet 1386. For example, the thickener 1380 may be fluidly connectable the ballasted reactor 1100 through effluent outlet 1384.

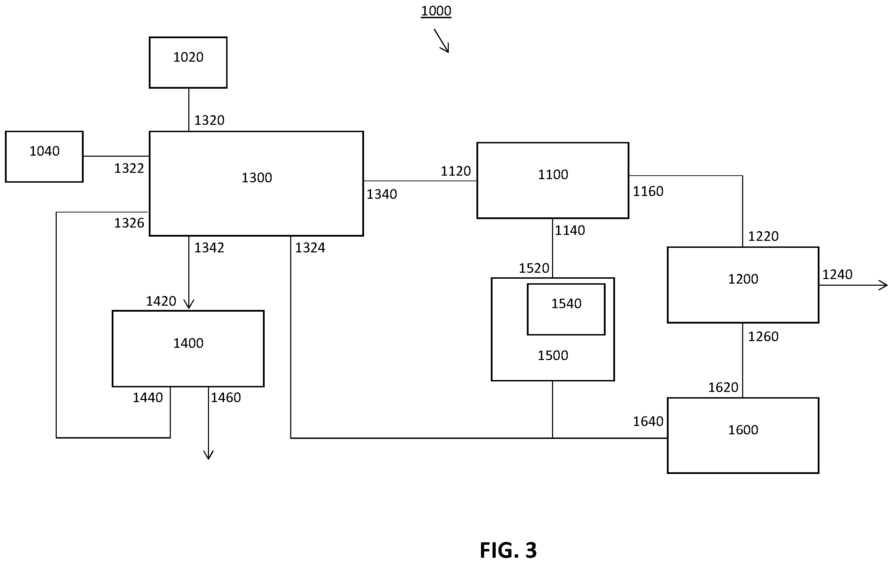

In some embodiments, for example, as shown in FIG. 3, the system 1000 further comprises a filter press 1400. The filter press 1400 may be fluidly connectable to the pre-treatment subsystem 1300 through the sludge outlet 1342. In some embodiments (not shown), the filter press 1400 may be fluidly connectable to the pre-treatment subsystem 1300 via the thickener 1380, through sludge outlet 1386. The filter press 1400 may have inlet 1420 (connectable to the pre-treatment subsystem 1300, as described), a pressate outlet 1440 and a filter cake outlet 1460. In some embodiments, the filter press 1400 may be fluidly connectable to the pre-treatment subsystem 1300 through pressate outlet 1440 and a fourth inlet 1326. In some embodiments, (not shown), the filter press 1400 may be fluidly connectable to the pre-treatment subsystem 1300 via the reaction tank 1360, through a fourth inlet.

Any of the systems described herein may further contain additional vessels, units, tanks, fluid lines, or pipelines as needed to process the desired wastewater. Furthermore, any of the systems described herein may be automated or semi-automated through sensors, control modules, valves, and/or pumps.

The wastewater treatment system may include one or more additional devices that are not explicitly shown in the figures. For instance, according to some embodiments, systems may include additional mixers, holding tanks, digesters for biological treatment systems, etc. Mixing within the treatment subsystem, including, for example, within the impregnation subsystem, and mixing within the pre-treatment subsystem, including, for example, within the reaction tank, may be performed and achieved using one or more methods, including mechanical mixers, diffused air, and jet mixers/aerators. Anoxic and anaerobic treatments in a biological treatment unit may be performed with a digester or mixed with either submerged or floating mechanical mixers. Aerobic treatments in a digester may further be combined with either coarse bubble, jet aeration, or a combination of fine bubble and mechanical mixing.

One or more further aspects of the disclosure are directed to a method of facilitating treatment of wastewater in a wastewater treatment system. The method of facilitating can comprise receiving wastewater from a source of wastewater in a pre-treatment unit, contacting the wastewater with at least one of a coagulant and a flocculant to produce dosed wastewater, thickening the dosed wastewater to produce a sludge and an effluent, conveying the effluent to a ballasted treatment unit, treating the effluent with ballast in the ballasted treatment unit to produce a treated wastewater, and settling the treated wastewater to generate a clean effluent and ballasted floc. In some embodiments, the method may comprise providing a ballast feed system configured to deliver ballast to one of the effluent, for example, in the ballasted treatment unit. The method may comprise ballasting the effluent with the delivered ballast to generate ballasted floc.

One or more further aspects of the disclosure, not forming part of the current invention, are directed to a method of retrofitting a wastewater treatment system to treat high-solids wastewater. The method may comprise retrofitting the wastewater treatment system to treat wastewater comprising inorganic solids, as disclosed herein. The method may comprise fluidly connecting a source of high-solids wastewater to a pre-treatment unit configured to remove gross solids from the high-solids wastewater and fluidly connecting the pre-treatment unit to a ballasted treatment system. The method may comprise providing a ballast feed system to deliver ballast to the ballasted treatment system. The method can comprise fluidly connecting the ballasted treatment system to a solids-liquid separation system. The method can further comprise fluidly connecting the solids-liquid separation system to the pre-treatment system to recirculate ballasted floc. In some embodiments, the method may comprise fluidly connecting the ballasted treatment system to a point of use. The point of use may be a point of direct use, a storage vessel, or a transportation vessel.

The phraseology and terminology used herein is for the purpose of description and should not be regarded as limiting. As used herein, the term "plurality" refers to two or more items or components. The terms "comprising," "including," "carrying," "having," "containing," and "involving," whether in the written description or the claims and the like, are open-ended terms, i.e., to mean "including but not limited to." Thus, the use of such terms is meant to encompass the items listed thereafter, and equivalents thereof, as well as additional items. Only the transitional phrases "consisting of" and "consisting essentially of," are closed or semi-closed transitional phrases, respectively, with respect to the claims. Use of ordinal terms such as "first," "second," "third," and the like in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Having thus described several aspects of at least one embodiment, it is to be appreciated various alterations, modifications, and improvements will readily occur to those skilled in the art. Any feature described in any embodiment may be included in or substituted for any feature of any other embodiment. Such alterations, modifications, and improvements are intended to be part of this disclosure, and are intended to be within the scope of the claims.

Accordingly, the foregoing description and drawings are by way of example only.

### Examples

### Example 1: High-Solids Wastewater Treatment System Mass Balance

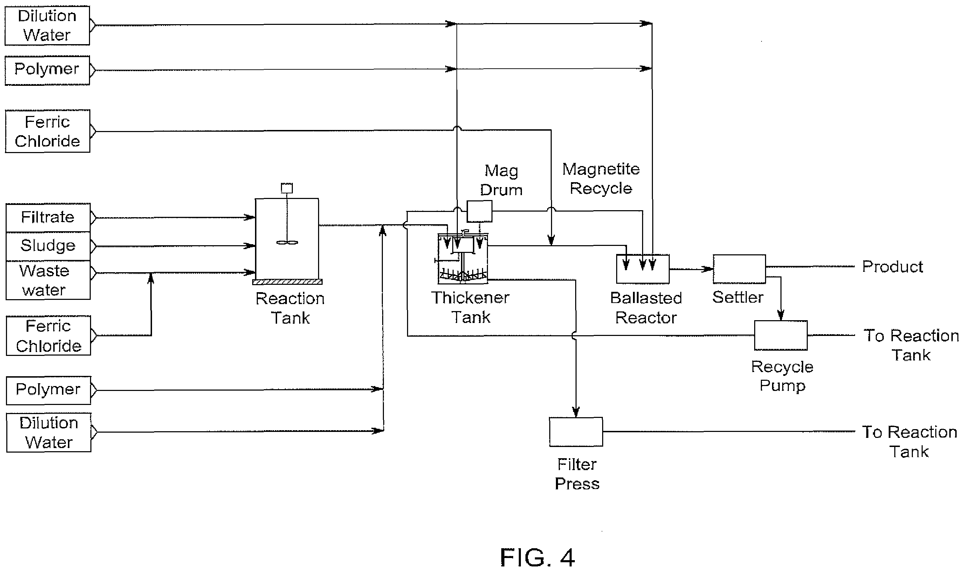

The system for treatment of wastewater can be operated according to the exemplary mass balance shown in FIG. 4. The mass balance was calculated using traditional chemical engineering methods. As shown in FIG. 4, the water treatment system disclosed herein can be operated to treat high-solids content wastewater.

Wastewater having 5,000 mg/L TSS is combined with a coagulant. In this example, the wastewater is lignite delivery facility sump flowing at 1893 liter/min (500 gallon/minute GPM) which is combined with ferric chloride at a concentration of about 5 mg/L Fe (38 mg/L 38% FeCl₃, 103 kg/day (228 lbs/day) at 2.88 liter per hour (0.76 gallons per hour).

The wastewater and coagulant are directed to a reaction tank with other recycle streams. The reaction tank has a hydraulic residence time (HRT) of 30 minutes. A dosed wastewater having 4,678 mg/L TSS flowing at a rate of 2074 1/min (548 GPM) exits the reaction tank and is directed to a thickener. Prior to entering the thickener, the dosed wastewater is combined with a polymer flocculant at a concentration of 2 mg/L 6 kg/day at 0.21 l/h (13.2 lbs/day at 0.055 GPH), and dilution water at a rate of 0.83 1/min (0.22 GPM)

The thickener is a settling tank containing an internal rake to clear solids. The dosed wastewater is further combined in the thickener with additional polymer flocculant at a concentration of 2 mg/L 12.7 kg/day (28 lbs/day), and dilution water at a rate of 1.9 l/min (0.5 GPM).

Together, the reaction tank and thickener make up the pre-treatment subsystem.

The thickener operates to produce a sludge and an effluent. The sludge contains gross solids at a concentration of 50,000 mg/L TSS (5%) and flows downstream at a rate of 189 l/min (50 GPM).

The pre-treatment effluent contains 100 mg/L TSS and flows downstream at a rate of 2169 1/min (573 GPM).

The effluent is directed to a ballasted reactor (in this example a CoMag^{®} reaction tank, distributed by Evoqua Water Technologies, LLC, Pittsburgh, PA). Prior to entering the ballasted reactor, the effluent is combined with a coagulant. In this example, the coagulant is ferric chloride at a concentration of about 5 mg/L Fe (38 mg/L 38% FeCl₃, 118.8 kg/day at 3.3 l/h (262 lbs/day at 0.87 GPH)). to produce a suspension having 110 mg/L TSS (assuming the added Fe forms Fe(OH)₃) and flowing at a rate of 2169 1/min (573 GPM).

The effluent is treated in the ballasted reactor with additional ballast (here magnetite). In this example, the ballast is obtained from the ballast recovery subsystem. However, fresh ballast may be introduced in the ballast reactor from a ballast feed subsystem and/or ballast impregnation subsystem.

The treated wastewater exits the ballasted reactor and is directed to the solids-liquid separation subsystem (here a settler tank). The settler operates to produce a solids lean effluent having less than 10 mg/L of TSS at a flow rate of 1862 1/min (492 GPM).

The solids-lean effluent may be considered the product water. As such, it may be delivered to a point of use, storage, transportation, or other. The solids-rich ballasted floc exits the settler tank and is delivered to a ballast recovery subsystem to be recirculated within the system.

The ballast recovery subsystem may be fluidly connected to the pre-treatment subsystem and the ballasted reactor. Here, the ballast recovery subsystem is configured to deliver floc (sludge) having 10,000 mg/L TSS to the reaction tank at a flow rate of 22.7 l/ min (6 GPM) and floc (sludge) having 10,000 mg/L TSS (1%) to the thickener at a flow rate of 284 l/ min (75 GPM) (15% recycle). The ballast recovery subsystem contains a magnetic drum configured to separate ballast from other solids. The magnetic drum is positioned to deliver the separated solids (sludge) to the reaction tank and/or thickener and the separated ballast to a ballast chamber for reuse in the ballasted reactor.

The exemplary wastewater treatment system also contains a dewatering operation positioned downstream from the thickener. Here, the dewatering operation is a filter press. The thickener sludge having 50,000 mg/L TSS (5%) is delivered to the filter press at a flowrate of 189 1/min (50 GPM).

The filter press dewaters the sludge and produces a pressate and a filter cake. The pressate having 200 mg/L TSS 13.6 kg/day (30,042 lbs/day, 25% solids) is recirculated to the reaction tank at a flowrate of 1621/min (42.8 GPM) where it is combined with the wastewater feed and coagulant, and other recycle streams as described above.

Accordingly, the wastewater treatment system disclosed herein can be efficiently operated to produce a product water having less than 10 mg/L TSS from a wastewater stream having 5,000 mg/L TSS by removing gross solids in a thickener prior to treating with a ballasted reactor. Additionally, the exemplified wastewater treatment system has a smaller footprint than conventional systems by placing the thickener upstream from the ballasted reactor and recirculating the various high-solids streams within the system.

### Example 2: Comparison of Clarifiers Utilized in Conventional Systems vs. System Including Ballasted Solids Removal

A ballasted clarifier as disclosed herein is an effective tool for treating industrial wastewater. However, wastewater with a high solids content (>2,000 mg/L solids) can cause treatment difficulties for the ballasted clarification process and other similar technologies. By providing bulk solids removal ahead of the ballasted clarifier with a traditional thickener, the ballasted clarifier can provide high quality product water with a very robust treatment process.

Some solids may carryover into the thickener effluent, possibly 100 mg/L. This flow can be easily treated by a ballasted clarifier as disclosed herein for suspended solids, heavy metals, phosphorus and other suspended particulate removal.

A ballasted clarifier as disclosed herein may have a smaller footprint than a conventional clarification system due to the faster settling of the ballasted, flocculated solids. While embodiments of the disclosed ballasted clarifier may use more energy than a conventional clarification system, the chemical usage is typically 10-15% lower than in conventional clarification, providing an offset of the increased energy usage. A ballasted clarifier as disclosed herein may also provide a better quality product water - while absorbing reasonable changes in water quality and flow.

Features and operational parameters of an exemplary ballasted clarifier (for example, solids/liquid separator 1200 in FIG. 1) that may be utilized in embodiments of the systems and methods disclosed herein that include a thickener upstream of the ballasted clarifier are compared to features and operation parameters of a clarifier that may be utilized in a conventional wastewater treatment system not including a thickener upstream of the clarifier in Table 1 below. The features and parameters in Table 1 were generated assuming a generic industrial wastewater treatment example. High solids wastewater flows to a thickener for bulk solids removal assisted by chemical coagulation and flocculation. With an inlet solids loading of 5,000 mg/L, the thickener sludge should reasonably reach 5% solids (50,000 mg/L) with a properly designed thickener. The comparative figures in Table 1 below are prophetic examples obtained by computer simulation.

**Table 1: Clarifier Comparison - Ballasted Clarification versus Conventional**

| ^{∗}Based on 1,800 gpm inlet clarifier flow - 5,000 mg/L solids | | |
|---|---|---|
| Criteria | | |
| Gravity Thickener Pre-treatment | Size: 38' diameter × 24' sideshell (16' × 12' center well) | |
| | Underflow: 5% solids, 180 gpm | |
| | Area, flux: 930 ft², 1.74 gpm/ft² | |
| | Solids loading: 116 lbs/ft²/day | |
| | Hydraulic loading: 2,780 gpd/ft² | |
| | Effluent: 1,620 gpm at 100 mg/L solids | |
| | Clarifier in System Including Upstream Ballasted Solids Removal | Conventional Clarification (1 gpm/ft²) |
| | | 48' × 22' |
| Clarifier size (footprint) | 1,350 ft² | 1,800 ft² |
| Hydraulic retention time (HRT) | 28 minutes | 138 minutes (4.9x) |
| Sludge recycle | Up to 30% included | Not included |
| Power requirement | 35 hp (with recycle pump) | 5 hp (15 hp with turbine) |
| Chemical savings | 10-15% less chemicals | - |
| Water Quality | Less than 3 NTU | Less than 5 NTU |
| Ballast material | Magnetite (5.2 s.g.) | None |
| Changing flows/solids | Responds rapidly | Difficult to handle |
| | | |
| gpm = US gallons per minute | | |
| gpd = US gallons per day | | |
| NTU = Nephelometric Turbidity Units (turbidity measurement) | | |
| s.g. = specific gravity | | |

Based on 6814 liter/min inlet clarifier flow
Size: 96.5 cm diameter x 61 cm sideshell (40.6 x 30.5 cm center well);
Underflow: 681.3 l/min;
Area, flux: 86.4 m2, 69.6 1/min/m2;
Solids loading: 566 kg/m2/day; Hydraulic loading: 113.2 m3/day/m2;
Effluent: 6132 1/min at 100 mg/l solids;
Conventional clarification (0.0407 liter/min/m2) 122 cm x 56 cm;
Clarifier size: 125.4 m2 (1350 ft2) and 167.2 m2 (1800 ft2);
Power requirement: 26.1 kW (35 hp) and 3.7 kW (5 hp).

As illustrated in Table 1 above, the footprint of a clarifier utilized in systems as disclosed herein may be reduced in size vs. a clarifier utilized in a conventional wastewater treatment system by from 167.2 m2 to 125.4 m2 (1800 ft2 to 1350 ft2) a reduction of [(1,800-1,350)/1,800] = 25%. The hydraulic retention time of a clarifier utilized in systems as disclosed herein may be reduced by a factor of about 5 (138/28 = 4.9) as compared to a clarifier utilized in a conventional wastewater treatment system. The clarifier of the systems disclosed herein may require 10-15% less chemicals, for example, flocculants or coagulants as compared to a clarifier of a conventional wastewater treatment system, may produce a higher quality effluent (3 NTU vs. 5 NTU) and may be capable of responding more rapidly to changes in wastewater flows and solids loadings than may be possible with a clarifier included in a conventional wastewater treatment system.

Those skilled in the art should appreciate that the parameters and configurations described herein are exemplary and that actual parameters and/or configurations will depend on the specific application in which the disclosed methods and materials are used. Those skilled in the art should also recognize or be able to ascertain, using no more than routine experimentation, equivalents to the specific embodiments disclosed.

## Claims

1. A high-solids wastewater treatment system (1000) comprising:
a ballasted reactor (1100) having an inlet (1120) and an outlet (1160);
a solids-liquid separation subsystem (1200) having an inlet (1220) in fluid communication with the outlet of the ballasted reactor and configured to separate treated wastewater into a solids-lean effluent and a solids-rich ballasted floc;
a pre-treatment subsystem (1300) positioned upstream from the ballasted reactor, having an inlet (1320) in fluid communication with a source of high-solids wastewater and configured to receive at least one of a coagulant and a flocculant to produce a dosed wastewater, the pre-treatment subsystem (1300) further configured to thicken the dosed wastewater and produce a sludge and an effluent, the pre-treatment subsystem (1300) having an effluent outlet (1340) in fluid communication with the inlet of the ballasted reactor (1100);
a ballast feed subsystem (1540) configured to deliver magnetite to the ballasted reactor (1100); and
a ballast recovery subsystem (1600) configured to receive the ballasted floc from the outlet of the solids-liquid separation subsystem (1200) and deliver the ballasted floc to at least one of the ballasted reactor (1100) and the pre-treatment subsystem (1300), the wastewater treatment system further comprising a filter press (1400) positioned downstream from the pre-treatment subsystem (1300) the filter press (1400) configured to receive the sludge from the pre-treatment subsystem (1300) and produce a pressate and a filter cake.

2. The system of claim 1, wherein the pre-treatment subsystem comprises a reaction tank having an inlet in fluid communication with a source of high-solids wastewater and a thickener positioned downstream from the reaction tank and having an outlet in fluid communication with the inlet of the ballasted reactor (1100).

3. The system of claim 3, wherein the pre-treatment subsystem further comprises an inlet (1326) in fluid communication with a pressate outlet (1440) of the filter press (1400).

4. The system of claim 1, wherein the source of the high-solids wastewater is configured and arranged to deliver wastewater comprising inorganic solids.

5. A method of treating a high-solids wastewater using the system according to any of claims 1-4, the method comprising:
contacting a wastewater feed from a source of high-solids wastewater with at least one of a coagulant and a flocculant to produce a dosed wastewater;
thickening the dosed wastewater to produce a sludge and an effluent;
treating the effluent with magnetite to produce a treated wastewater;
settling the treated wastewater in a solids-liquid separation subsystem to produce a solids-lean effluent and a solids-rich ballasted floc; and
conveying the ballasted floc to at least one of the ballasted reactor and the pre-treatment subsystem and further comprising passing the sludge through a filter press (1400) downstream from the pre-treatment subsystem to produce a pressate and a filter cake.

6. The method of claim 5, further comprising conveying the pressate to the wastewater feed.

7. The method of claim 5, comprising conveying the ballasted floc to the ballasted reactor (1100) and the pre-treatment subsystem (1300).

8. The method of claim 5, comprising pre-treating the wastewater feed by contacting the wastewater feed with the coagulant to produce the dosed wastewater.

9. The method of claim 8, further comprising contacting the dosed wastewater with the flocculant.

## Patentansprüche

1. Ein Aufbereitungssystem (1000) für Abwasser mit hohem Feststoffgehalt, das Folgendes beinhaltet:
einen ballastierten Reaktor (1100), der einen Einlass (1120) und einen Auslass (1160) aufweist;
ein Feststoff-Flüssigkeit-Trennungssubsystem (1200), das einen Einlass (1220) in Fluidkommunikation mit dem Auslass des ballastierten Reaktors aufweist und
konfiguriert ist, um behandeltes Abwasser in einen feststoffarmen Abfluss und einen feststoffreichen ballastierten Flockenschlamm zu trennen;
ein stromaufwärts von dem ballastierten Reaktor positioniertes Vorbehandlungssubsystem (1300), das einen Einlass (1320) in Fluidkommunikation mit einer Quelle von Abwasser mit hohem Feststoffgehalt aufweist und konfiguriert ist, um mindestens eines von einem Koagulierungsmittel und einem Flockungsmittel aufzunehmen, um ein dotiertes Abwasser zu erzeugen, wobei das Vorbehandlungssubsystem (1300) ferner konfiguriert ist, um
das dotierte Abwasser einzudicken und einen Schlamm und einen Ausfluss zu erzeugen, wobei das Vorbehandlungssubsystem (1300) einen Abflussauslass (1340) in Fluidkommunikation mit dem Einlass des ballastierten Reaktors (1100) aufweist;
ein Ballasteinspeisungsubsystem (1540), das konfiguriert ist, um dem ballastierten Reaktor (1100) Magnetit zuzuführen; und
ein Ballastrückgewinnungssubsystem (1600), das konfiguriert ist, um den ballastierten Flockenschlamm von dem Auslass des Feststoff-Flüssigkeit-Trennungssubsystems (1200) aufzunehmen und den ballastierten Flockenschlamm mindestens einem von dem ballastierten Reaktor (1100) und dem Vorbehandlungssubsystem (1300) zuzuführen, wobei das Abwasseraufbereitungssystem ferner eine Filterpresse (1400) beinhaltet, die stromabwärts von dem Vorbehandlungssubsystem (1300) positioniert ist, wobei die Filterpresse (1400) konfiguriert ist, um den Schlamm von dem Vorbehandlungssubsystem (1300) aufzunehmen und ein Filtrat und einen Filterkuchen zu erzeugen.

2. System gemäß Anspruch 1, wobei das Vorbehandlungssubsystem einen Reaktionstank mit einem Einlass in Fluidkommunikation mit einer Quelle von Abwasser mit hohem Feststoffgehalt und einen Eindicker, der stromabwärts von dem Reaktionstank positioniert ist und einen Auslass in Fluidkommunikation mit dem Einlass des ballastierten Reaktors (1100) aufweist, beinhaltet.

3. System gemäß Anspruch 3, wobei das Vorbehandlungssubsystem ferner einen Einlass (1326) in Fluidkommunikation mit einem Filtratauslass (1440) der Filterpresse (1400) beinhaltet.

4. System gemäß Anspruch 1, wobei die Quelle des Abwassers mit hohem Feststoffgehalt konfiguriert und angeordnet ist, um Abwasser, das anorganische Feststoffe beinhaltet, zuzuführen.

5. Ein Verfahren zum Aufbereiten eines Abwassers mit hohem Feststoffgehalt unter Verwendung des Systems gemäß einem der Ansprüche 1-4, wobei das Verfahren Folgendes beinhaltet:
In-Kontakt-Bringen einer Abwassereinspeisung von einer Quelle von Abwasser mit hohem Feststoffgehalt mit mindestens einem von einem Koagulierungsmittel und einem Flockungsmittel, um ein dotiertes Abwasser zu erzeugen;
Eindicken des dotierten Abwassers, um einen Schlamm und einen Abfluss zu erzeugen;
Behandeln des Abflusses mit Magnetit, um ein behandeltes Abwasser zu erzeugen; Absetzenlassen des behandelten Abwassers in einem Feststoff-Flüssigkeit-Trennungssubsystem, um einen feststoffarmen Abfluss und einen feststoffreichen ballastierten Flockenschlamm zu erzeugen; und
Fördern des ballastierten Flockenschlamms zu mindestens einem von dem ballastierten Reaktor und dem Vorbehandlungssubsystem und
ferner beinhaltend das Leiten des Schlamms durch eine Filterpresse (1400) stromabwärts von dem Vorbehandlungssubsystem, um ein Filtrat und einen Filterkuchen zu erzeugen.

6. Verfahren gemäß Anspruch 5, ferner beinhaltend das Fördern des Filtrats zu der Abwassereinspeisung.

7. Verfahren gemäß Anspruch 5, beinhaltend das Fördern des ballastierten Flockenschlamms zu dem ballastierten Reaktor (1100) und dem Vorbehandlungssubsystem (1300).

8. Verfahren gemäß Anspruch 5, beinhaltend das Vorbehandeln der Abwassereinspeisung durch In-Kontakt-Bringen der Abwassereinspeisung mit dem Koagulierungsmittel, um das dotierte Abwasser zu erzeugen.

9. Verfahren gemäß Anspruch 8, ferner beinhaltend das In-Kontakt-Bringen des dotierten Abwassers mit dem Flockungsmittel.

## Revendications

1. Un système de traitement d'eaux usées à haute teneur en matières solides (1000) comprenant :
un réacteur ballasté (1100) ayant une entrée (1120) et une sortie (1160) ;
un sous-système de séparation matières solides-liquide (1200) ayant une entrée (1220) en communication fluidique avec la sortie du réacteur ballasté et configuré pour séparer des eaux usées traitées en un effluent pauvre en matières solides et un floc ballasté riche en matières solides ;
un sous-système de prétraitement (1300) positionné en amont du réacteur ballasté, ayant une entrée (1320) en communication fluidique avec une source d'eaux usées à haute teneur en matières solides et configuré pour recevoir au moins un élément parmi un coagulant et un floculant afin de produire des eaux usées ayant reçu une dose, le sous-système de prétraitement (1300) étant configuré en outre pour épaissir les eaux usées ayant reçu une dose et produire des boues et un effluent, le sous-système de prétraitement (1300) ayant une sortie d'effluent (1340) en communication fluidique avec l'entrée du réacteur ballasté (1100) ;
un sous-système d'alimentation en ballast (1540) configuré pour apporter de la magnétite au réacteur ballasté (1100) ; et
un sous-système de récupération de ballast (1600) configuré pour recevoir le floc ballasté provenant de la sortie du sous-système de séparation matières solides-liquide (1200) et apporter le floc ballasté à au moins un élément parmi le réacteur ballasté (1100) et le sous-système de prétraitement (1300), le système de traitement d'eaux usées comprenant en outre un filtre-presse (1400) positionné en aval du sous-système de prétraitement (1300), le filtre-presse (1400) étant configuré pour recevoir les boues provenant du sous-système de prétraitement (1300) et produire un pressat et un gâteau de filtration.

2. Le système de la revendication 1, dans lequel le sous-système de prétraitement comprend un réservoir de réaction ayant une entrée en communication fluidique avec une source d'eaux usées à haute teneur en matières solides et un épaississeur positionné en aval du réservoir de réaction et ayant une sortie en communication fluidique avec l'entrée du réacteur ballasté (1100).

3. Le système de la revendication 3, dans lequel le sous-système de prétraitement comprend en outre une entrée (1326) en communication fluidique avec une sortie de pressât (1440) du filtre-presse (1400).

4. Le système de la revendication 1, dans lequel la source des eaux usées à haute teneur en matières solides est configurée et agencée pour apporter des eaux usées comprenant des matières solides inorganiques.

5. Un procédé consistant à traiter des eaux usées à haute teneur en matières solides à l'aide du système selon n'importe lesquelles des revendications 1 à 4, le procédé comprenant le fait :
de mettre en contact une alimentation en eaux usées provenant d'une source d'eaux usées à haute teneur en matières solides avec au moins un élément parmi un coagulant et un floculant afin de produire des eaux usées ayant reçu une dose ;
d'épaissir les eaux usées ayant reçu une dose afin de produire des boues et un effluent ;
de traiter l'effluent avec de la magnétite afin de produire des eaux usées traitées ;
de laisser décanter les eaux usées traitées dans un sous-système de séparation matières solides-liquide afin de produire un effluent pauvre en matières solides et un floc ballasté riche en matières solides ; et
de transporter le floc ballasté jusqu'à au moins un élément parmi le réacteur ballasté et le sous-système de prétraitement et
comprenant en outre le fait de faire passer les boues à travers un filtre-presse (1400) en aval du sous-système de prétraitement afin de produire un pressat et un gâteau de filtration.

6. Le procédé de la revendication 5, comprenant en outre le fait de transporter le pressat jusqu'à l'alimentation en eaux usées.

7. Le procédé de la revendication 5, comprenant le fait de transporter le floc ballasté jusqu'au réacteur ballasté (1100) et au sous-système de prétraitement (1300).

8. Le procédé de la revendication 5, comprenant le fait de prétraiter l'alimentation en eaux usées en mettant en contact l'alimentation en eaux usées avec le coagulant afin de produire les eaux usées ayant reçu une dose.

9. Le procédé de la revendication 8, comprenant en outre le fait de mettre en contact les eaux usées ayant reçu une dose avec le floculant.
